# EUROPEAN PATENT SPECIFICATION

(11) **EP 1 070 730 B1**
(45) Date of publication and mention of the grant of the patent: **13.10.2004**
(21) Application number: 00306192.6
(22) Date of filing: 20.07.2000
(51) Int. Cl.: C08F 220/18, H01B 3/44

(54) **Resin compositions and electric cable joints**
Harzzusammensetzung und elektrische Kabelverbindung
Composition de résine et jonction de câble électrique

(30) Priority: 21.07.1999 GB 9917119
(43) Date of publication of application: 24.01.2001
(73) Proprietor: Pirelli Cables (2000) Limited, London W1K 4QZ (GB)
(72) Inventor: Williamson, Paul Brian, Wigan, Lancashire WN4 8SN (GB)
(74) Representative: West, Alan Harry

(56) References cited:
- EP-A- 0 398 538
- EP-A- 0 921 530
- WO-A-93/12147
- GB-A- 1 300 387
- US-A- 3 590 018
- US-A- 4 925 908
- US-A- 5 135 660

## Description

This invention relates to cold-setting synthetic resin compositions suitable for use in filling joints in electric cables (especially power cables for service at low and medium voltages) and to the joints in which they are used.

Polyurethane-based casting resins are widely used, but are potentially hazardous because of the highly-reactive isocyanate ingredient. Epoxy-based systems are comparably hazardous. WO98/25989 describes an alternative class of composition which is claimed to be relatively hazard-free, but this is a proprietary material whose long-term effects may not yet be fully understood.

Acrylic resin compositions are sometimes used, but these are mostly based wholly or in part on methyl methacrylate and/or - or *iso*-butyl methacrylate, usually with ethylene glycol dimethacrylate as crosslinking agent. Each of these ingredients is classed as "irritant", liable to cause sensitisation on skin contact, and suspected of being teratogenic; and the compositions as supplied are volatile and of low flashpoint, and so require "highly flammable" labelling and precautions in distribution and storage. Of course, less volatile monomers can be used to reduce fire hazard, but in general they tend to have high viscosities, risking incomplete filling of cavities, poor adhesion to cable materials, and high cost, and do not in general avoid possible health hazards. Further, they do not adhere well to polyethylene surfaces unless they are specially prepared to promote "chemical" bonding.

We have now discovered a narrow range of acrylic resin compositions that appear to be free of health hazards or at worst only slightly irritant, of high enough flash point to avoid significant flammability risks, mobile enough to fill cavities reliably, and which adhere sufficiently to all the usual cable material, including in particular polyethylenes that have been cross-linked by a silane grafting technique (the "Sioplas" or "Monosil" process).

In accordance with the main aspect of the invention, there is provided a resin composition including a resin base consisting of at least one (meth)acrylate of an alkanol having from 6 to 20 carbon atoms, together with a di- or tri(meth)acrylate (i.e. an acrylate or a methacrylate with two or three functional groups) crosslinker present in an amount of between 0.2 and 5 parts by weight per hundred parts of resin base, an initiator and at least one mineral filler; provided that where the di- or tri(meth)acrylate crosslinker is present in an amount of 0.7 parts by weight per 100 parts of resin base or more, a non-reactive solvent is present in the resin composition in an amount of 0.1 to 10 parts by weight per hundred parts by weight of the resin base.

Preferably the composition is presented as a 2-part resin system, Part A comprising the base, the crosslinker and the solvent (if present), and Part B the filler and initiator. Known 2-compartment packages can be used.

Preferably the resin base is derived from one or more methacrylates of alkanols having 9-14 (preferably 10-13) carbon atoms: isodecyl methacrylate is readily available and is particularly preferred; it has a viscosity about 5 mPas at 25°C, flash point over 110°C, at worst "low" irritation, low volatility and odour, low surface tension, low density and good filler retention. Tridecyl methacrylate is also commercially available and also has a low irritation rating. Lauryl methacrylate and stearyl methacrylate are also available, but are more expensive and in the applicants' judgement less satisfactory in overall balance of properties.

The resin base may be derived from one or more acrylates of an alkanol from 6 to 20 carbon atoms, but these are less preferred than the corresponding methacrylates owing to the fact that the acrylates tend to have higher health and safety risks associated with them, compared to the corresponding methacrylate compounds.

The di- or tri(meth)acrylate may be any di- or tri(meth)acrylate that is soluble and free of significant hazards; (meth)acrylates of higher functionality than three may be used, but may require rather smaller contents. Irritant di- or tri(meth)acrylate are of course undesirable, but as the proportion of the crosslinker is low they may not all be absolutely excluded. We prefer dimethacrylates of high molecular weight that form flexible crosslinks and more especially those derived from polyethylene glycol as being non-hazardous and contributing to other desirable properties; the dimethacrylate derived from the grade of polyethylene glycol sold as "PEG200" is particularly suitable. For this dimethacrylate, the molar ratio specified corresponds to about 0.2 to 5 parts by weight per hundreds parts of resin base. Other dimethacrylates that can be used include triethylene glycol dimethacrylate (TIEGDMA), ethylene glycol dimethacrylate (EGDMA), diethylene glycol dimethacrylate (DEGDMA), Tetraethylene glycol dimethacrylate (TTEGDMA), 1,4-butanediol dimethacrylate (BDDMA), 1,6-hexanediol dimethacrylate (HDDMA) and 1,3-butylene glycol dimethacrylate (BGDMA) as well as polyethylene glycol dimethacrylates of higher molecular weight than that derived from "PEG200" (e.g. those derived from PEG400 and PEG600). Diacrylate analogues of all of these can be used, but are less satisfactory in respect of health risk. Trifunctional alternatives are also available, but tend to have a relatively higher viscosity which makes their handling more difficult. However, low viscosity trifunctional (meth)acrylate crosslinker compounds may be used.

The term "non-reactive solvent" is used herein to indicate an organic solvent which is miscible with the (meth)acrylate and the crosslinker components with no visible precipitation, haziness or loss of clarity being observed after addition of the solvent. Additionally, the solvent should be non-reactive with respect to the (meth)acrylate and the crosslinker and in particular, it should not be capable of taking part in the polymerisation reaction. Thus, the solvent should not include any functional groups which would participate in the reaction between the (meth)acrylate, the crosslinker and the initiator, such that the solvent is incorporated in the polymer chain.

In particular, preferred non-reactive solvents have a relatively low molecular weight (e.g. 40 to 300, more preferably 70 - 90), have a low volatility, are of low cost, have a high flash point (e.g. a Pensky-Martin CC flash point of greater than 40°C, more preferably greater than 95°C), have a relatively high boiling point (for example greater than 80°C, preferably greater than 150°C and most preferably greater than 200°C) and have a low viscosity (e.g. less than 50 cps, more preferably less than 10 cps and most preferably less than 4 cps at 25°C). Other preferred properties of the solvent are that it is a clear liquid which is more preferably colourless, that it has a low odour and that it is considered to be no more hazardous than the other components of the resin composition. Preferably, the solvent is classified as non-toxic. Additionally or alternatively, the solvent is preferably non-harmful to the environment.

When the crosslinker is present in an amount of less than 0.7 parts by weight per hundred parts of resin base, the cured resin retains a degree of surface tack that results in good adhesion between the resin composition and the e.g. cable insulation material with a cable joint (typically XLPE or PVC). However, when the amount of the crosslinker is increased beyond this level, the degree of conversion of the (meth)acrylate monomer is greater which results in a loss of the adhesive tack of the resin composition. Balanced against the loss of adhesive tack, at least some of the other physical properties of the resin composition are improved with increasing conversion of the monomer. For example the thermal stability of the resin (i.e. the resistance to foaming when heated) is increased with increasing amounts of the crosslinker.

By adding the solvent to the resin base when relatively high levels of the crosslinker are used, the surface "tackiness" of the cured resin composition can be re-introduced so that the improved properties are maintained but with no loss of adhesive performance of the resin.

Of course, the solvent may be added to the formulation even when the amount of crosslinker present is less than 0.7 parts by weight per hundred parts of the resin base.

Preferred solvents include esters, such as the range of dimethyl esters of adipic, glutaric and succinic acid available from Solutia, Inc. under the trade mark SANTASOL; lactones such as γ-butyrolactone; and pyrrolidones such as N-methylpyrrolidone.

To determine the minimum amount of solvent that is required to be added to a particular resin formulation, the following tests may be used. A 25 mm wide flat sheet of cross-linked polyethylene (which may have been cast or extruded onto a base substrate) is prepared. A layer of the resin composition is then applied to the sheet of polyethylene and allowed or caused to cure. Once the resin is fully cured, it is peeled from the polyethylene sheet. If the resin exhibits observable stress whitening (i.e. the resin shows evidence of becoming opaque at the interface between the resin layer and the polyethylene sheet), then there is sufficient surface tack present in the resin composition. However, if no stress whitening is observed, then an increased amount of solvent is required in the composition. Thus, by incrementally increasing the amount of solvent, the minimum required amount to generate a suitable level of surface tack can easily be determined for a particular resin composition, since this is the least amount of solvent necessary to cause the resin to stress-whiten when peeled from the polyethylene sheet.

Simple low-cost mineral fillers such as chalk and sand can be used, as can solid or hollow glass beads and (subject to electrical requirements) some grades of fly ash. Among chalk fillers, we prefer ground limestones with particle sizes predominately in the range 2-50 µm suitable grade is sold by Omya UK Ltd under the designation CALMOTE AD and has a weight-median particle diameter of about 10 µm. Sand fillers are preferably of well-rounded grain type with particle sizes predominately in the range 130-400 µm. The grades supplied by Hepworth Minerals and Chemicals Ltd under the designations CONGLETON CHST 50 (nominal average grain size 255 µm and CHELFORD 30 (nominal average grain size 400 µm) are both suitable; both of these are silica sands derived from glacial deposits of the Pleistocene Period, washed and graded; CONGLETON CHST 50, besides having smaller particle size, is surface treated, and this is found to give rather better flow properties.

Solid or preferably hollow mineral microspheres can be used alone or in addition to chalk and/or sand and/or other ordinary mineral fillers. Use of hollow microspheres reduces the density of the mixture and in consequence makes it feasible to increase the maximum volume of resin that can be supplied and mixed in a single two-compartment pack. Microspheres of soda borosilicate glass and soda-lime borosilicate glass are readily available and suitable, but hollow microspheres derived from fly ash (which may be regarded as alumino-silicate glasses) are also readily available, satisfactory, and less expensive and are therefore preferred. These microspheres tend to have a fairly broad particle size range, and particles in the approximate range from 50-500 µm are broadly suitable. The grade of fly-ash microspheres sold under the trademark FILLITE as Fillite PG has been found particularly satisfactory and has a particle size distribution such that at least 97% passes through a 300 µm mesh, 40-60% through 150 µm, 15-30% through 100 µm and 2-10% through 50 µm. Fillite grades SG(500), FG(300) and 52/7S are also thought to be suitable for use in the compositions of the invention.

Alumina trihydrate can be used for "zero halogen" flame retardance, or barium titanate for high permittivity. Other fillers that might be used include antimony trioxide, zinc borate, gypsum, wollastonite, various clays, mica, quartz, silica, silicon carbide, zirconium silicate, carbon black, synthetic zeolites, and oxides, e.g. of aluminum, zinc and titanium.

The formulations accept a high filler loading, for example up to 65% (by weight) of alumina trihydrate has been used to make a flame-retardant composition and 70% of barium titanate to make a stress-control formulation with a permittivity of 18 (at 20°C and 50Hz). These high-filler formulations may not fully achieve all other desirable properties.

The initiator is preferably a peroxide, but other free-radical sources could be used if desired. Simpler peroxides, such as benzoyl peroxide, may be preferred on cost grounds. Peroxides (especially) may be pre-coated on a part of the mineral filler.

If rapid cure is desired (as it usually will be) a catalyst (or "accelerator") may be used. These are generally amines, and are another potential hazard source; we prefer to avoid the simpler catalysts such as dimethyl- and diethyl-anilines and dimethyl *para*-toluidine and to use one of the condensation products of *para*-toluidine with ethylene oxide, and most especially the one sold by International Speciality Chemicals under the designation BISOMER PTE, which is understood to have on average two ethylene oxide units condensed onto each of the two accessible valencies of the nitrogen atom.

Where the amine accelerator is a liquid component, as is the case with the PTE accelerator, then it is typically dispersed within the liquid monomer component in part A of a 2-pack composition. However, it is also possible to use one or more amines in a solid powder form, such as for example 4,4'-dimethylaminodiphenylmethane (10% in ethylene glycol maleic anhydride adduct). In the case of a solid amine accelerator, it is typically dispersed within the filler and initiator in part B of a two-pack formulation.

As well as the above described optional curing system of a benzoyl peroxide initiator with an amine accelerator, it is also possible to use a ketone peroxide initiator with a cobalt based accelerator as the curing system to cure the resin composition.

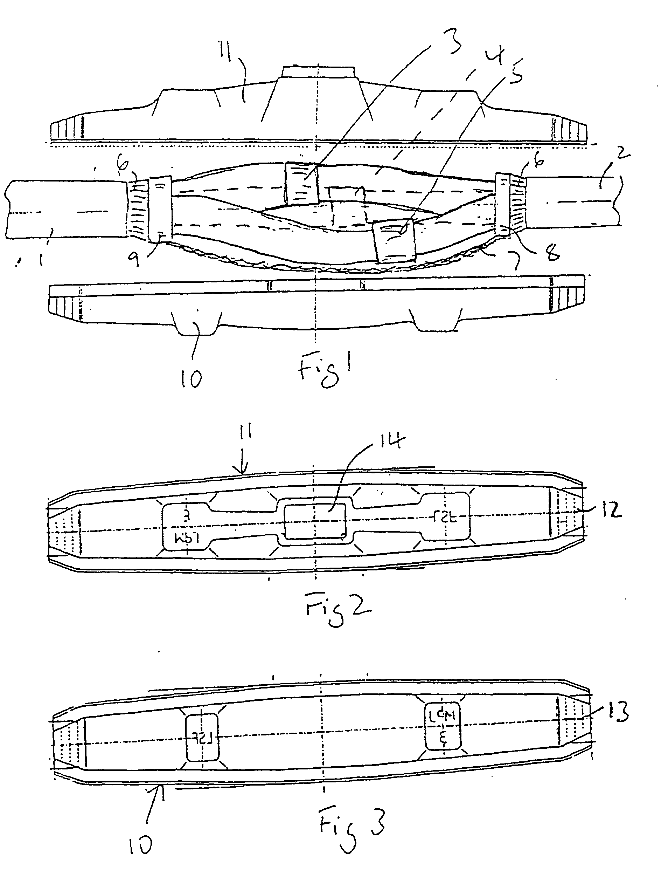

The invention will be further described, by way of example, with reference to the following tables in which numbered formulations are examples of the invention and lettered formulations are for comparison and to the accompanying drawing in which:-
Figure 1 is a diagrammatic side view of a cable joint in accordance with the invention in course of assembly; and
Figures 2 and 3 are a top views respectively of upper and lower enclosure halves forming parts of the cable joint of Figure 1.

The following comparative formulations were prepared in accordance with Table 1 below:

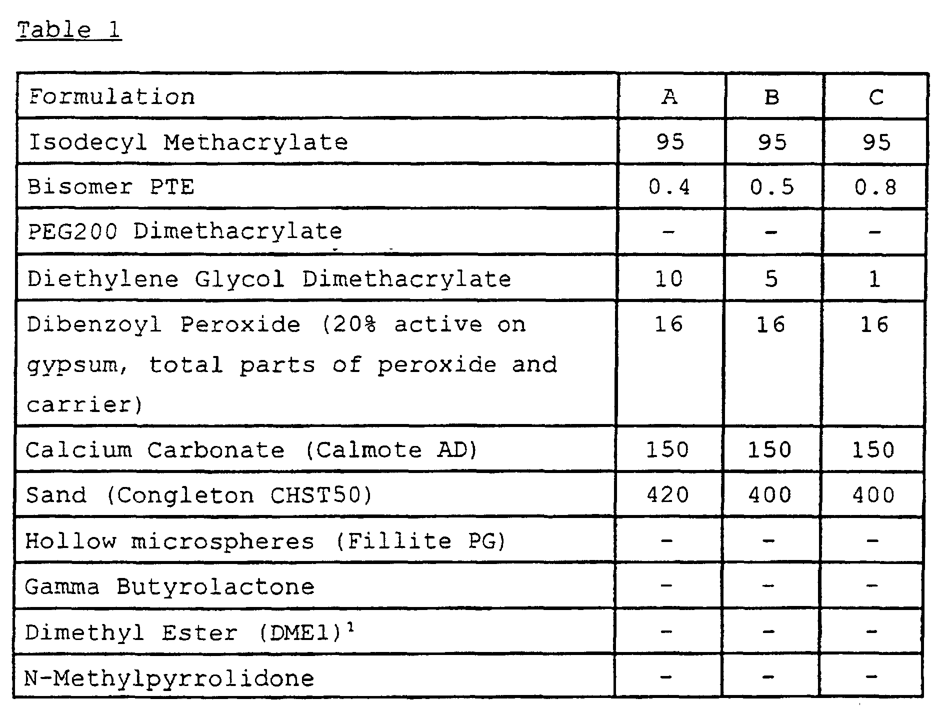

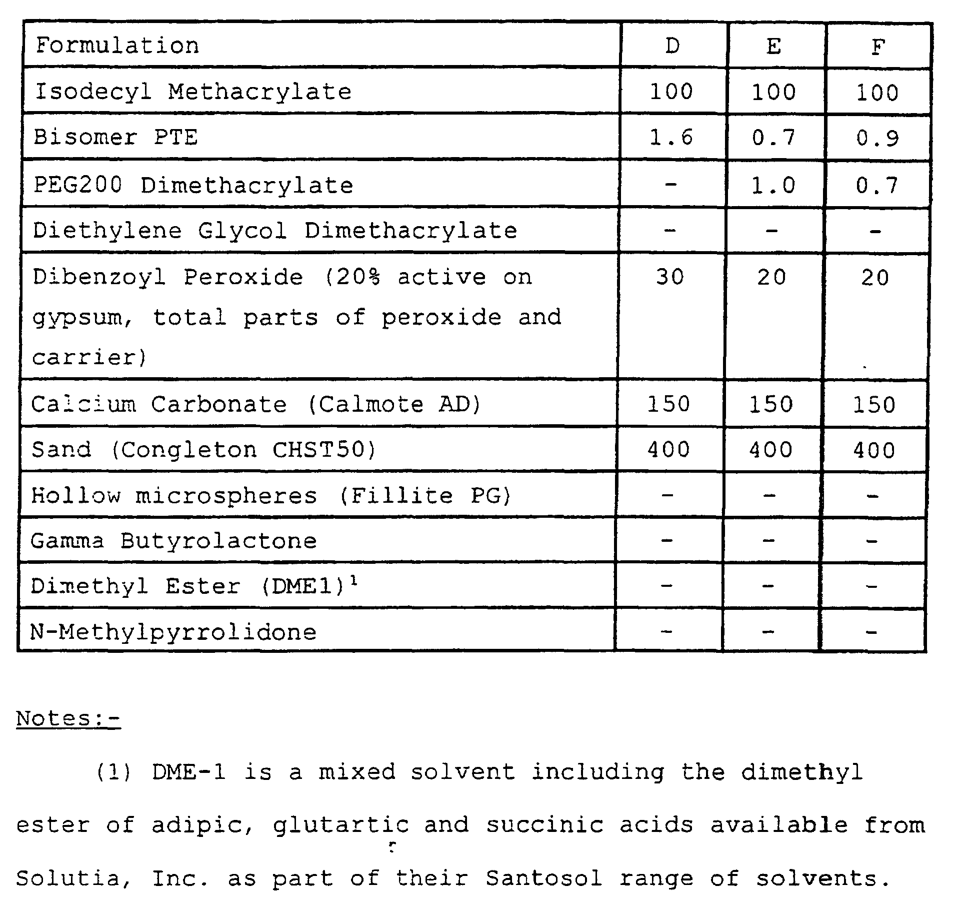

Formulations A-C use isodecyl methacrylate base but crosslink it conventionally using usual amounts of diethylene glycol dimethacrylate. The product ranges from "hard-set" to "elastomeric"; it fails the requirements of ESI recommendation C81 and BS 7888 Part 3 approval tests because it adheres insufficiently to crosslinked polyethylene.

Formulation D has no dimethacrylate and hence the IDMA reacts with itself to form an 'oligomer' (i.e. chain extension via the methacrylate end group). The product is soft and tacky but there is residual unreacted IDMA monomer which will volatilise at temperatures of greater than about 50°C (exotherm on curing/service environment) to give a foaming effect and consequently porosity. The resin meets BS7888 Pt. 3 as it is tested in 'cold' ambient water typically 15 to 25°C. However, it fails C81 specification as the water test temperature is above 50°C, which results in foaming and loss of adhesion to the outer sheath due to sagging caused by thermoplastic flow.

Formulations E and F do not foam and appear stable at 100°C. However, they all have insufficient adhesive tack for sealing around XLPE insulation, since the amount of the dimethacrylate is such that there is not enough unreacted monomer to provide sufficient adhesive tack to adhere the resin to the insulation with sufficient strength.

The following resin compositions which are examples of the present invention, were prepared in accordance with Table 2 below:

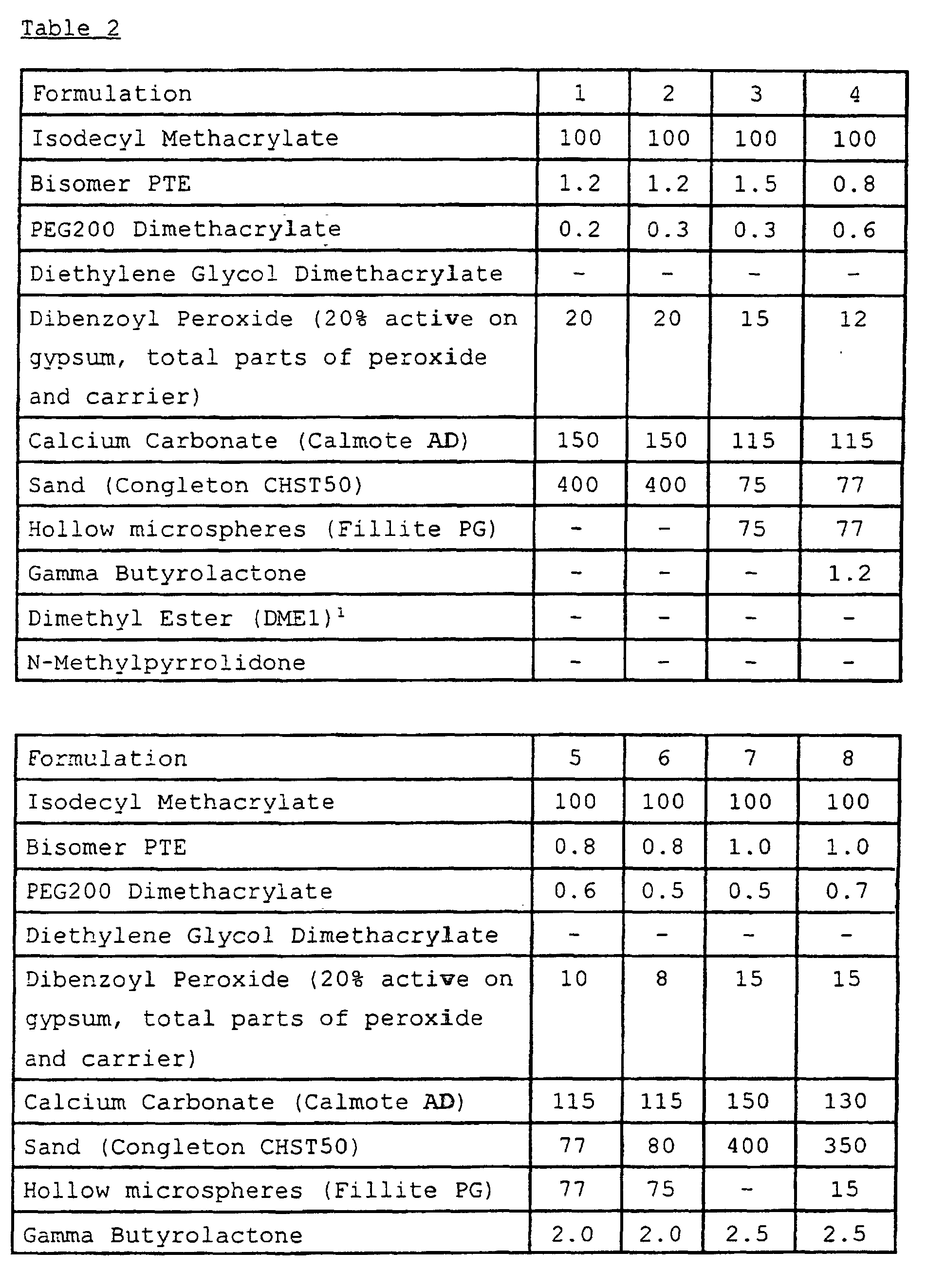

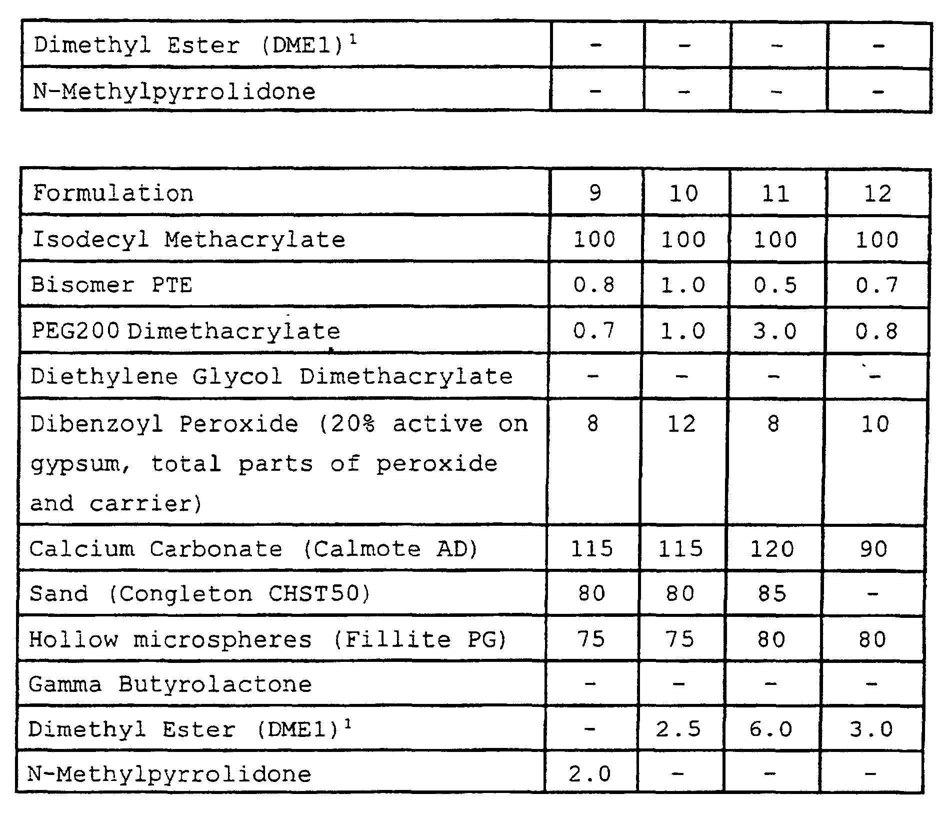

Formulations 1 and 3 resulted in slight foaming of the resin which was acceptable but not preferred. Formulation 2 had a good balance between monomer conversion and surface tack which resulted in good physical properties (e.g. no foaming) and a good adhesion to the insulating sheathes of the cables. The difference between Formulation 2 and Formulation 3 was that Formulation 3 had a peak exotherm of 71°C which caused the small amount of foaming that was observed. Formulation 2 on the other hand used less of the amine accelerator and had a peak exotherm of only 52°C which resulted in no foaming (i.e. no volatilisation of the monomer).

All of Formulations 4-12 resulted in a cured resin which had good thermal stability and sufficient surface tack (generated by the presence of the solvent in the formulation) to provide good adhesion of the resin to the cable joint such that all resin compositions fully meet the requirements of the ES1 C81/BS 7888 Part 3 tests.

All of the Examples 1 - 12 provide resin compositions which have good flow properties and stable insulation resistance values in the order of 2.5 x 10⁴ MΩ in a typical 3-core 185 mm² copper waveform straight joint with crosslinked polyethylene (XLPE) insulation and using about 20 litres of resin to fill the joint enclosure.

The density of the uncured resin in Examples 1-12 was such that the filler materials stayed in suspension during curing.

Example Formulations 3 - 6 and 8 - 12 illustrate the use of hollow glass microspheres to reduce density and so overall weight (and transport costs); it is feasible to supply these formulations in 2-compartment foil packs in volumes up to around 6 litres.

Of the three solvents exemplified above, DME-1 is the most preferred as it has a more favourable health and environmental profile (i.e. non-hazardous).

In the drawing, a joint is made between two lengths of 3-core single-wire-armoured power distribution cable 1 and 2 respectively. The cable ends are cut back in the usual way and the corresponding cores connected electrically by connectors 3, 4, 5. The armour wires 6 are electrically bonded together, for instance using copper braid 7 and constant-force spring (clock spring) connecting devices 8, 9. The whole is now enclosed using lower and upper vacuum-formed plastics half-enclosures 10 and 11 (the tapered end-parts 12 and 13 may be trimmed, if required, to fit the diameters of the cables). As so far described, the joint is entirely conventional. In accordance with the invention, the resin composition of Example 1 is now made up, poured into the joint through the central opening 14 in the upper enclosure-half 11, and allowed to harden.

## Claims

1. A cold-setting composition for use in filling electric cable joints and which sets to form a resin having surface tack, the composition comprising, as resin base monomer, at least one (meth)acrylic acid ester of an alkanol having from 6 to 20 carbon atoms, together with a di- or tri(meth)acrylate crosslinker present in an amount of between 0.2 and 5 parts by weight per hundred parts of resin base monomer, an initiator and at least one mineral filler; provided that where the crosslinker is present in an amount of 0.7 parts by weight or more per hundred parts of resin base monomer, a non-reactive solvent is present in the composition in an amount of 0.1 to 10 parts by weight per hundred parts of resin base monomer.

2. A 2-part composition in accordance with claim 1, Part A comprising the resin base monomer, the crosslinker and the solvent (if present), and Part B comprising the filler and the initiator.

3. A resin composition as claimed in claim 1 or claim 2 in which the said alkanol has 9-14 carbon atoms.

4. A resin composition as claimed in claim 1 or claim 2 in which the said alkanol has 10-13 carbon atoms.

5. A resin composition as claimed in claim 1 or claim 2 in which the said (meth)acrylic acid ester is *iso*decyl methacrylate.

6. A resin composition as claimed in claim 1 or claim 2 in which the said (meth)acrylic acid ester is tridecyl methacrylate.

7. A resin composition as claimed in any one of claims 1-6 in which the crosslinker is derived from polyethylene glycol.

8. A resin composition as claimed in any one of claims 1-7 comprising a mineral filler selected from chalk, sand, solid or hollow glass beads and fly ash.

9. A resin composition as claimed in claim 8 comprising a sand filler of well-rounded grain type with particle sizes predominately in the range 130-400 µm.

10. A resin composition as claimed in claim 8 wherein the filler comprises solid or hollow glass microspheres.

11. A resin composition as claimed in any one of claims 1-7 comprising ground limestone with particle sizes predominately in the range 2-50 µm.

12. A resin composition as claimed in any one of claims 1-7 comprising a filler selected from alumina trihydrate, barium titanate, antimony trioxide, zinc borate, gypsum, wollastonite, clays, mica, quartz, silica, silicon carbide, zirconium silicate, carbon black, synthetic zeolites, and oxides of aluminum, zinc and titanium.

13. A resin composition as claimed in any one of claims 1-12 in which the initiator is a peroxide.

14. A resin composition as claimed in any one of claims 1-13 including also a catalyst.

15. A resin composition as claimed in claim 14 in which the catalyst is a condensation product of *para*-toluidine with ethylene oxide.

16. An electric cable joint filled with a cold set resin derived from a composition claimed in any one of claims 1 - 15.

## Patentansprüche

1. Kalthärtende Zusammensetzung zur Verwendung bei der Füllung elektrischer Kabelverbindungen, welche unter Bildung eines Harzes mit Oberflächenklebrigkeit härtet, wobei die Zusammensetzung als Harz-Basismonomer mindestens einen (Meth)acrylsäureester eines Alkanols mit 6 bis 20 Kohlenstoffatomen zusammen mit einem Di- oder Tri(meth)acrylat-Vernetzer, der in einer Menge zwischen 0,2 und 5 Gew.-Teilen pro 100 Gew.-Teilen des Harz-Basismonomers vorliegt, einen Initiator und mindestens einen Mineralfüllstoff umfasst, mit der Massgabe, dass, wenn der Vernetzer in einer Menge von 0,7 Gew.-Teilen oder mehr pro 100 Gew.-Teilen des Harz-Basismonomers vorliegt, ein nicht-reaktives Lösungsmittel in einer Menge von 0,1 bis 10 Gew.-Teilen pro 100 Gew.-Teilen des Harz-Basismonomers in der Zusammensetzung vorliegt.

2. 2-Teil-Zusammensetzung gemäss Anspruch 1, wobei Teil (A) das Harz-Basismonomer, den Vernetzer und das Lösungsmittel (wenn es vorliegt) umfasst, und Teil (B) den Füllstoff und den Initiator umfasst.

3. Harzzusammensetzung wie in Anspruch 1 oder Anspruch 2 beansprucht, wobei das Alkanol 9 bis 14 Kohlenstoffatome besitzt.

4. Harzzusammensetzung wie in Anspruch 1 oder Anspruch 2 beansprucht, wobei das Alkanol 10 bis 13 Kohlenstoffatome besitzt.

5. Harzzusammensetzung wie in Anspruch 1 oder Anspruch 2 beansprucht, in der der (Meth)acrylsäureester Isodecylmethacrylat ist.

6. Harzzusammensetzung wie in Anspruch 1 oder Anspruch 2 beansprucht, in welcher der (Meth)acrylsäureester Tridecylmethacrylat ist.

7. Harzzusammensetzung wie in mindestens einem der Ansprüche 1 bis 6 beansprucht, wobei der Vernetzer von Polyethylenglykol abgeleitet ist.

8. Harzzusammensetzung wie in mindestens einem der Ansprüche 1 bis 7 beansprucht, die einen Mineralfüllstoff umfasst, der ausgewählt ist aus Kalk, Sand, massiven oder hohlen Glaskugeln und Flugasche.

9. Harzzusammensetzung wie in Anspruch 8 beansprucht, die einen Sandfüllstoff mit gut abgerundeten Körnern mit Teilchengrössen überwiegend im Bereich von 130 bis 400 µm umfasst.

10. Harzzusammensetzung wie in Anspruch 8 beansprucht, wobei der Füllstoff massive oder hohle Glasmikrokugeln umfasst.

11. Harzzusammensetzung wie in mindestens einem der Ansprüche 1 bis 7 beansprucht, die gemahlenen Kalkstein mit Teilchengrössen vorwiegend im Bereich von 2 bis 50 µm umfasst.

12. Harzzusammensetzung wie in mindestens einem der Ansprüche 1 bis 7 beansprucht, die einen Füllstoff umfasst, ausgewählt aus Aluminiumoxidtrihydrat, Bariumtitanat, Antimontrioxid, Zinkborat, Gips, Wollastonit, Tonen, Glimmer, Quarz, Silica, Siliciumcarbid, Zirkonsilicat, Russ, synthetischen Zeoliten und Oxiden von Aluminium, Zink und Titan.

13. Harzzusammensetzung wie in mindestens einem der Ansprüche 1 bis 12 beansprucht, wobei der Initiator ein Peroxid ist.

14. Harzzusammensetzung wie in mindestens einem der Ansprüche 1 bis 13 beansprucht, die ebenso einen Katalysator einschliesst.

15. Harzzusammensetzung wie in Anspruch 14 beansprucht, wobei der Katalysator ein Kondensationsprodukt von para-Toluidin mit Ethylenoxid ist.

16. Elektrische Kabelverbindung, die gefüllt ist mit einem kalthärtenden Harz, das abgeleitet ist aus einer Zusammensetzung wie in mindestens einem der Ansprüche 1 bis 15 beansprucht.

## Revendications

1. Composition durcissant à froid, qui est destinée au remplissage de jonctions de câbles électriques et qui donne en durcissant une résine à surface collante, laquelle composition comporte, en tant que monomère de base de résine, au moins un ester d'acide acrylique ou méthacrylique et d'un alcanol comportant de 6 à 20 atomes de carbone, ainsi qu'un agent de réticulation de type diacrylate, triacrylate, diméthacrylate ou triméthacrylate, présent en une proportion de 0,2 à 5 parties en poids pour 100 parties de monomère de base de résine, un amorceur et au moins une charge minérale, sous réserve que, si l'agent de réticulation se trouve présent en une proportion supérieure ou égale à 0,7 parties en poids pour 100 parties de monomère de base de résine, il y ait dans la composition un solvant non-réactif, présent en une proportion de 0,1 à 10 parties en poids pour 100 parties de monomère de base de résine.

2. Composition, conforme à la revendication 1, en deux parties, soit une partie A comprenant le monomère de base de résine et l'agent de réticu-lation, ainsi que le solvant s'il y en a, et une partie B comprenant la charge et l'amorceur.

3. Composition de résine conforme à la revendication 1 ou 2, dans laquelle ledit alcanol comporte 9 à 14 atomes de carbone.

4. Composition de résine conforme à la revendication 1 ou 2, dans laquelle ledit alcanol comporte 10 à 13 atomes de carbone.

5. Composition de résine conforme à la revendication 1 ou 2, dans laquelle ledit ester d'acide acrylique ou méthacrylique est du méthacrylate d'isodécyle.

6. Composition de résine conforme à la revendication 1 ou 2, dans laquelle ledit ester d'acide acrylique ou méthacrylique est du méthacrylate de tridécyle.

7. Composition de résine conforme à l'une des revendications 1 à 6, dans laquelle l'agent de réticulation dérive d'un polyéthylèneglycol.

8. Composition de résine conforme à l'une des revendications 1 à 7, qui contient une charge minérale choisie parmi de la craie, du sable, des billes de verre pleines ou creuses, et des cendres volantes.

9. Composition de résine conforme à la revendication 8, contenant une charge qui est du sable à grains bien arrondis dont les tailles de particules se situent en prédominance dans l'intervalle allant de 130 à 400 µm.

10. Composition de résine conforme à la revendication 8, dans laquelle la charge comprend des microsphères de verre pleines ou creuses.

11. Composition de résine conforme à l'une des revendications 1 à 7, qui contient du calcaire broyé en particules dont les tailles se situent en prédominance dans l'intervalle allant de 2 à 50 µm.

12. Composition de résine conforme à l'une des revendications 1 à 7, qui contient une charge choisie parmi les suivantes : alumine trihydratée, titanate de baryum, trioxyde d'antimoine, borate de zinc, gypse, wollastonite, argiles, mica, quartz, silice, carbure de silicium, silicate de zirconium, noir de carbone, zéolithes synthétiques, oxyde d'aluminium, oxyde de zinc et oxyde de titane.

13. Composition de résine conforme à l'une des revendications 1 à 12, dans laquelle l'amorceur est un peroxyde.

14. Composition de résine conforme à l'une des revendications 1 à 13, qui contient aussi un catalyseur.

15. Composition de résine conforme à la revendication 14, dans laquelle le catalyseur est un produit de condensation de para-toluidine et d'oxyde d'éthylène.

16. Jonction de câbles électriques, remplie d'une résine durcie à froid qui dérive d'une composition conforme à l'une des revendications 1 à 15.
